(19) Europäisches Patentamt
European Patent Office
Office européen des brevets

(11) Publication number: 0 180 313 A1

# (12) EUROPEAN PATENT APPLICATION

(21) Application number: 85306708.0

(22) Date of filing: 19.09.85

(51) Int. Cl.⁴: **A 01 N 47/20**, A 01 N 47/22, A 01 N 47/30, A 01 N 47/32, A 01 N 47/36// (A01N47/20, 43:653, 43:50), (A01N47/22, 43:653, 43:50), (A01N47/30, 43:653, 43:50), (A01N47/32, 43:653, 43:50), (A01N47/36, 43:653, 43:50)

(30) Priority: **02.10.84 GB 8424799**

(43) Date of publication of application: **07.05.86 Bulletin 86/19**

(84) Designated Contracting States: **AT BE CH DE FR GB IT LI LU NL SE**

(71) Applicant: **IMPERIAL CHEMICAL INDUSTRIES PLC, Imperial Chemical House Millbank, London SW1P 3JF (GB)**

(72) Inventor: **Backhouse, Bryan Stuart, Stone Acre Rishworth New Road Rishworth, Sowerby Bridge West Yorks HX6 4QQ (GB)**
Inventor: **Woodcock, Paul, Fallows Cottage Knutsford Road, Chelford SK 10452 Cheshire (GB)**

(74) Representative: **Colens, Alain M.G.M. et al, Imperial Chemical Industries PLC Legal Department: Patents P.O. Box 6 Bessemer Road, Welwyn Garden City Hertfordshire AL7 1HD (GB)**

## (54) Triazole or imidazole fungicide compositions.

(57) The present invention is directed to a synergistic composition of a triazole or imidazole fungicide, for example imazalil, with a phytotoxic carbamate or urea such as phenmedipham, barban, chlorpropham, diuron or neburon. These compositions are useful for the preservation of polymers, paint films, wood, leather, textiles, paper products and adhesives.

EP 0 180 313 A1

# TRIAZOLE OR IMIDAZOLE FUNGICIDE COMPOSITIONS

This specification describes an invention relating to a novel biocide composition comprising a triazole or imidazole fungicide and certain ureas or carbamates.

Although triazole or imidazole fungicides generally have very high anti-fungal activity, it is known that a few species of fungi are resistant to these chemicals. Thus, if these fungicides are used alone to preserve a substrate, such as a paint film, which will be exposed to a wide range of deteriogenic fungi, defacement of the substrate can arise from the growth of the few tolerant species. It has now been found that certain phytotoxic ureas and carbamates, which do not necessarily have good anti-fungal activity, unexpectedly boost the activity of the triazole or imidazole fungicides, particularly against these tolerant fungal species, and thus broaden the spectrum of their anti-fungal activity.

According to the present invention there is provided a composition of an anti-fungal triazole, imidazole and a herbicidal carbamate or urea.

Suitable anti-fungal triazoles include triazolyl alcohols, ketones and triazolyl ketals such as are disclosed generically and specifically in UK 1,264,520, UK 1,451,038, UK 1,522,657, EP 11768A, UK 1,529,818, UK 1,532,156, BE 869,163, US 3,647,810, US 3,821,376, EP 11769A, UK 2,003,731A, UK 2,064,520A, US 4,073,921 DE 2,820489A, DE 2,908,378A, EP 15756A, EP 31563A, EP 55997A, EP 40345A, EP 43419A, EP 47594A, EP 60223A, EP 69442A, EP 71568A and EP 72580A the contents of which are incorporated herein by reference. Specific examples of such triazoles are triadimefon, triadimenol, propiconazole, bitertanol, paclobutrazol and dichlobutrazol.

Suitable anti-fungal imidazoles include 1-substituted imidazoles such as are disclosed in UK 1,318,590, UK 1,522,848 UK 1,530,172 and UK 1,533,748 the contents of which are incorporated herein by reference. Specific examples of such imidazoles are imazalil, fenapanil and prochloraz.

A preferred anti-fungal triazole or imidazole for use in the present composition conforms to the general formula:

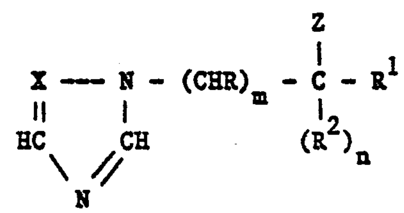

I

wherein m & n are each independently 0 or 1

X is CH or N

when n = 0,

Z is =O;

& R & $R^1$ are each independently selected from H, substituted hydroxy, substituted amino, a hydrocarbon group and a heteroaryl group; or

when n = 1,

Z is -H, -OH, -CN or halo, preferably -Cl or -Br;

& R, $R^1$ & $R^2$ are each independently selected from H, substituted hydroxy, substituted amino, a hydrocarbon group and a heteroaryl group; or

Z and $R^1$ together with the carbon atom to which both are attached, form a 1,3-dioxalan ring;

provided that Z, $R^1$ and $R^2$ are different.

Preferred hydrocarbon groups represented by R, $R^1$ and $R^2$ are alkyl, especially $C_{1-6}$-alkyl, such as t-butyl, alkenyl, especially $C_{2-6}$-alkenyl, such as allyl, cycloalkyl, such as cyclopropyl and cyclohexyl, aryl, especially monocyclic aryl, such as phenyl, and aralkyl such as benzyl.

Preferred substituted hydroxy and substituted amino groups are alkoxy, aryloxy, aralkoxy, mono- and di-substituted amino, such as alkylamino, alkenylamino, cycloalkylamino, arylamino, diarylamino, aralkylamino, dialkylamino and N-aryl-N-alkylamino, in which the alkyl, cycloalkyl and alkenyl groups preferably contain up to 6 carbon atoms and the aryl groups are preferably monocyclic, especially phenyl. Still preferred substituted hydroxy groups are substituted phenoxy, phenylphenoxy and benzyl groups.

The heteroaryl group represented by R, $R^1$ or $R^2$ is preferably monocyclic, such as triazolyl, imidazolyl or pyrimidyl.

The aryl and heteroaryl groups and the dioxalan ring may be substituted, for example, by $C_{1-6}$-alkyl and $C_{1-6}$-alkoxy, halogen, especially chlorine, bromine or fluorine, $C_{1-4}$-halo-alkyl and alkoxy, nitro, phenyl, phenoxy, benzyl, amino, mono- or di-substituted amino, hydroxy, morpholino, carboxylic acid and carboxylic acid ester. The alkyl, alkenyl and cycloalkyl groups may be substituted, for example, by alkoxy, halogen, nitro, amino and hydroxy.

Examples of groups represented by R are H, 4-chlorphenoxy, 4-phenylphenoxy, 4-chlorobenzyl and of groups represented by $R^1$ and $R^2$ are H, t-butyl, n-butyl, 2,4-dichlorophenyl, 2-chlorobenzyl, 4-chlorobenzyl, prop-2-enyloxy, N-propyl-N-(2,4,6-trichlorphenoxy-ethyl)amino and phenyl.

Preferred herbicidal carbamates and ureas are selected from di- tri- and tetra-substituted carbamates and ureas especially those carrying aryl or aryl and alkyl groups, in which the aryl and alkyl groups may be substituted.

Especially preferred carbamates and ureas conform to the formula:

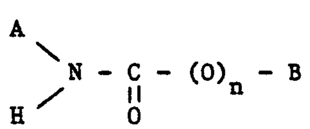

II

wherein A is aryl or heteroaryl;

n is 0 or 1

when n = 0

B is substituted amino;

and when n = 1

B is alkyl, alkenyl, alkynyl, aryl or heteroaryl.

The substituted amino group represented by B may carry one or two substituents which may be alkyl, alkenyl, alkynyl, alkoxy, aryl or heteroaryl. The alkyl, alkenyl, alkynyl and alkoxy groups represented by, or present in, B preferably contain up to 10, more preferably up to 5, carbon atoms. Optional substituents for these groups are preferably halogen and hydroxy. Examples of such groups are ethyl, butyl, 1-methylprop-2-yn-1-yl, ethynyl, 4-chlorobut-2-ynyl alkoxy and, more especially, methyl. The aryl groups represented by A and B are preferably mono- or bicyclic, such phenyl, naphthyl and substituted derivatives thereof, examples of suitable substituents being halogen, $C_{1-4}$-alkyl, $C_{1-4}$-alkoxy, haloalkyl, phenoxy and substituted phenoxy and alkylaminosulphonyl. The heteroaryl groups represented by A and B are preferably mono or bi-cyclic. Examples of aryl and heteroaryl groups are phenyl, 2-methylphenyl, 3-chloro-4-methylphenyl, 4-methoxy & 4-chloro- phenoxyphenyl, 4-i-propylphenyl, 3-methylphenyl, 2-methylphenyl, 4-chlorophenyl, 3,4-dichlorophenyl and benzthiazol-2-yl

It is especially preferred that n = 0, A is phenyl or substituted phenyl, preferred substitutents being halo, $C_{1-4-alkyl}$ and $C_{1-4}$alkoxy, and B is dimethylamino.

Preferred ureas include diuron, neburon, benzthiazuron, isoproturon, chloroxuron, linuron, chlortoluron, siduron, buturon, difenoxuron and chlorbromuron while other potentially suitable ureas are fenuron, monuron, metoxuron and cycluron, fluometuron, karbutilate, parafluron, fluothiuron, chloreturon, fenmeturon, fluoretoxuron and trimefluor. Preferred carbamates include phenmedipham, barban, propham and chlorpropham while other potential carbamates are chlorbufam, carbetamide and asulam.

The relative proportions of the fungicide and herbicide may be varied within wide limits but are preferably from 20:1 to 1:20,

more preferably 10:1 to 1:10 and especially preferably 1:1 to 1:5, respectively.

In a preferred composition the fungicide comprises a triazole of Formula I in which X is nitrogen, Z is OH, R is H, $R^1$ is alkyl, $R^2$ is optionally substituted benzyl or phenyl, m = 1 and n = 1. In such a fungicide $R^1$ preferably contains up to 6 carbon atoms and $R^2$ is preferably substituted in the phenyl ring by one or two $C_{1-4}$-alkyl or halo groups, especially chloro or bromo, the substituents preferably being in the ortho and/or para positions. A preferred species of this class is the compound wherein $R^1$ is t-butyl and $R^2$ is 2-chlorobenzyl. This compound is 1-(triazolylmethyl)-1-(2-chlorobenzyl)-2,2-dimethyl-n-propanol, hereinafter referred to as "TCDP". Another preferred compound of Formula I is 1-(triazolylmethyl)-1-(2,4-dichlorophenyl)-n-pentanol, hereinafter referred to as "TDP".

A preferred composition comprises a triazole as hereinbefore described and diuron, a urea of the Formula II in which n = 0, A is 3,4-dichloro-phenyl and B is dimethylamino. An especially preferred composition comprises the fungicide TCDP and the urea, diuron.

The composition may contain other ingredients, such as other biocides, diluents, solvents, dispersants etc and a preferred composition contains from 10% to 30% by weight of the herbicide and from 5% to 15% by weight of the fungicide in the form of an aqueous dispersion.

The composition of the present invention has unexpectedly enhanced anti-fungal activity compared with the activity of either component alone, i.e. the combination is synergistic. The composition is especially suitable for the preservation of paint-films against the growth of fungi but may be used in other, non-agricultural environments where fungal growth is a problem, e.g. in the preservation of wood, leather, textiles, paper products , adhesives and polymers.

According to a further feature of the present invention there is provided a method for the preservation of a medium

susceptible to fungal growth against such growth which comprises incorporating into or applying to the surface of the medium a fungal-inhibiting quantity of a composition of an anti-fungal triazole or imidazole and a herbicidal carbamate or urea as hereinbefore described.

The quantity of the composition may be varied within wide limits but is preferably used in amounts such that the total amount of fungicide and herbicide is from 0.01% to 10%, by weight, based on the weight of the medium being protected, and more preferably from 0.05% to 5%.

Where the medium to be protected is a paint film the composition is conveniently incorporated into the paint, e.g. during the manufacture or packing thereof, so that it is evenly distributed in the paint film after application to a substrate.

The synergistic effect associated with the present composition is demonstrated in the following Examples which further illustrate the invention and in which all parts and percentages are by weight unless otherwise illustrated.

Example 1

Fifty different fungal species, representative of the wide range of naturally occuring deteriogens, were screened for tolerance to various anti-fungal agents and to compositions of the anti-fungal agents with the herbicidal urea, diuron. The number of fungal species tolerant to a range of known anti-fungal agents at different levels and to diuron is shown in Table 1.

Table 1

| Anti-fungal Agent | No of Tolerant Species at Stated Concentration of Agent (ppm) | | |
|---|---|---|---|
| | 125 | 25 | 5 |
| Triazoles/Imidazoles | | | |
| TCDP (triazole) | 0 | 2 | 2 |
| Imazalil (imidazole) | 3 | 7 | 16 |
| Comparative Fungicides | | | |
| Carbendazim (benzimidazole) | 4 | 4 | 4 |
| 2,3,5,6-Tetrachloro-4-(methylsulphonyl)-pyridine | 0 | 0 | 1 |
| Chlorothalonil | 2 | 4 | 17 |
| Captan | 0 | 34 | 34 |
| Herbicidal Urea | | | |
| Diuron | 36 | 50 | 50 |

The number of fungal species tolerant to 50:50 compositions of the herbicidal urea, diuron, and the same anti-fungal agents is shown in Table 2.

Table 2

| Anti-fungal Agent | No of Tolerant Species at Stated Concentration of Compn(ppm) | | |
|---|---|---|---|
| | 250 | 50 | 10 |
| Triazoles/Imidazoles | | | |
| TCDP (triazole) | 0 | 0 | 0 |
| Imazalil (imidazole) | 0 | 3 | 9 |
| Comparative Fungicides | | | |
| Carbendazim (benzimidazole) | 3 | 4 | 4 |
| 2,3,5,6-Tetrachloro-4-(methylsulphonyl)-pyridine | 0 | 0 | 1 |
| Chlorothalonil | 2 | 4 | 17 |
| Captan | 0 | 34 | 34 |

These result show that, although it has a very poor range of

activity against the fungal species at the highest concentration and is inactive against all 50 species at the lower levels, diuron significantly improves activity range of the triazole and imidazole anti-fungal agents at all levels. In contrast, diuron has virtually no effect on the activity range of the other anti-fungal agents.

Example 2

MIC's were determined, using the general method described in Example 1, for three triazole or imidazole fungicides alone and two herbicidal ureas alone against the two fungal species, Scolecobasidium humicola (S. humicola) and Trichocladium canadense (T. canadense), which were resistant to the action of the triazole, TCDP. MIC's were also determined for combinations of the three triazole or imidazole fungicides with various fixed levels of the ureas. The fungicides and herbicides and their MICs, alone and in combination, against the two fungal species are set out in Table 3.

Table 3

MICs of the Antifungal Agents alone and in combination with Ureas

| Chemical/Composition | MIC (ppm) | |
|---|---|---|
| | S humicola | T canadense |
| TCDP | 100 | 125 |
| TDP | 128 | - |
| Diuron | 125 | 150 |
| Neburon | 400 | 400 |
| TCDP + 5 ppm Diuron | 25 | 25 |
| TCDP + 25 ppm Diuron | 5 | 10 |
| TCDP + 5 ppm Neburon | 25 | 25 |
| TCDP + 25 ppm Neburon | 10 | 25 |
| TDP + 5 ppm Diuron | 32 | - |
| TDP + 25 ppm Diuron | 16 | - |

The results in Table 3 show that the chosen organisms are significantly more resistant to triazoles than the other 48 fungal species included in the experiments reported in Example 1 because the MICs of the agents in respect of these species are at least 100 ppm compared with a maximum of 5 ppm in respect of the other 48 fungal

species and that they are even more resistant to the herbical ureas. The results also show, quite clearly, that a composition of the fungicide with the urea is inhibitory at levels well below the levels at which either compound, taken alone, inhibits growth of the two fungal species. This demonstrates that the composition is truly synergistic.

Example 3

MIC's were determined, using the general method described in Example 1, for the triazole fungicide, TCDP, alone and a number of herbicidal ureas and carbamates alone against the organism Scolecobasidium humicola (S humicola) and for the combinations of TCDP with various fixed levels of the herbicides. The herbicides and the MICs are set out in Table 4.

Table 4

MICs of the TCDP, Ureas & Carbamates alone and in combination

| Chemical/Composition | MIC against S humicola |
|---|---|
| TCDP | 125 |
| Benthiazuron | 125 |
| TCDP + 5 ppm Benthiazuron | 64 |
| Isoproturon | 250 |
| TCDP + 25 ppm Isoproturon | 64 |
| Chloroxuron | 25 |
| TCDP + 5 ppm Chloroxuron | 64 |
| Linuron | 125 |
| TCDP + 5 ppm Linuron | 64 |
| TCDP + 25 ppm Linuron | 16 |
| Chlortoluron | 250 |
| TCDP + 125 ppm Chlorotoluron | 64 |

Table 4 (continued)

MICs of the TCDP, Ureas & Carbamates alone and in combination

| Chemical/Composition | MIC against S humicola |
|---|---|
| Siduron | 250 |
| TCDP + 5 ppm Siduron | 64 |
| Phenmedipham | 125 |
| TCDP + 5 ppm Phenmedipham | 64 |
| TCDP + 25 ppm Phenmedipham | 16 |
| Barban | 25 |
| TCDP + 5 ppm Barban | 4 |
| Chlorpropham | 125 |
| TCDP + 5 ppm Chlorpropham | 64 |

The results in Table 4 show the significantly higher activity of a wide range of composition within the scope of the present invention compared with the individual components of the compositions.

Example 4

A styrene acrylic emulsion paint having a pH of 9.0 was prepared according to the following composition:

| Component | % |
|---|---|
| Styrene-acrylic Latex | 36.80 |
| Water | 35.70 |
| Titanium Dioxide (TIOXIDE RCR) | 28.00 |
| China clay (Grade 1) | 6.75 |
| Ethylene glycol | 1.00 |
| Solvent (CELLOSOLVE) | 0.75 |
| Thickener (CELLOFAS B) | 0.55 |
| Softener (CALGON PT 50%) | 0.20 |
| Softener (NOPCO NWD) | 0.15 |
| Ammonia (0.88) | 0.10 |

Samples of the paint, dosed with various levels of TCDP,

diuron and mixtures thereof, were applied by brushing to yellow cedar panels (12"x6"x½"). The panels were exposed in the open air in jungle site in Puerto Rico, set in a vertical plane facing south. They were examined at regular intervals to determine the period of exposure (in months) for at least 70% of the panel to become defaced by fungal growth. The results are recorded in Table 5.

Table 5

| Chemical/Composition | Level (%) | Period to 70% Defacement (months) |
|---|---|---|
| TCDP | 0.1 | 3 |
| | 0.3 | 3 |
| | 0.6 | >7 |
| Diuron | 0.1 | 3 |
| | 0.3 | 3 |
| | 0.6 | 3 |
| TCDP<br>Diuron | 0.1)<br>0.1) | >7 |
| TCDP<br>Diuron | 0.1)<br>0.3) | >7 |

The results show that a composition of a triazole and a urea within the scope of the present invention is significantly more active than either chemical is alone at the same total loading of active chemical. This assessment demonstrates that the synergistic action of the present compositions is also effective in an important application.

Example 5

Formulations

Various combinations of diuron and TCDP giving a total active agent content of 10-50% w/w were prepared by bead-milling in the presence of non-ionic or anionic agents. Glycols and xanthan gum/clays were added as humectants and viscosity adjusting agents respectively. Other formulating agents such as antifoam agents were included where necessary. The products were white pourable dispersions, dispersible with water in all proportions, stable to freezing and heat ageing.

As examples of suitable non-ionic agents the following were employed (trade marks are given) : Synperonic NP 30, Synperonic NPE 1800, Synperonic NP13, Tetronic 1104, Tetronic 1107, Tetronic 707, Tetronic 1307, Tetronic 904, Tetronic 1504, Matexil DN-TP. As example of suitable anionic agents Ultrazine NA, Agent 23D, Matexil DA-N, Perlankrol PA and Protectol SA were used.
The following defoaming agents were used in the formulations : Defoamer DS, Surfynol 104E, Nonanol, Silcolapse 5001.
As example of humectants/antifreeze agents: ethylene glycol, propylene glycol, glycerol, dipropylene glycol, Sorbo 105, diethylene glycol were employed.

A typical formulation is :

| | |
|---|---|
| Total active agents | : 30 parts |
| Synperonic NPE 1800 | : 4.5 parts |
| Propylene glycol | : 0.75 parts |
| Surfynol 104E | : 0.5 parts |
| Water | : to 100 parts |

CLAIMS

1. A composition of an anti-fungal triazole or imidazole and a herbicidal carbamate or urea.
2. A composition according to claim 1 wherein the triazole or imidazole is of the general formula :

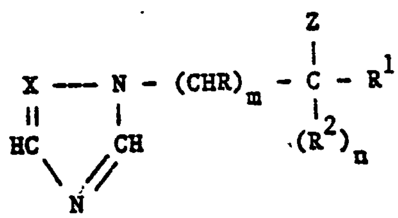

I

wherein m & n are each independently 0 or 1

X is CH or N

when n = 0,

Z is =O;

& R & $R^1$ are each independently selected from H, substituted hydroxy, substituted amino, a hydrocarbon group and a heteroaryl group; or

when n = 1,

Z is -H, -OH, -CN or halo, preferably -Cl or -Br;

& R, $R^1$ & $R^2$ are each independently selected from H, substituted hydroxy, substituted amino, a hydrocarbon group and a heteroaryl group; or

Z and $R^1$ together with the carbon atom to which both are attached, form a 1,3-dioxalan ring;

provided that Z, $R^1$ and $R^2$ are different.

3. A composition according to claim 1 wherein the herbicidal urea or carbamate is of the general formula

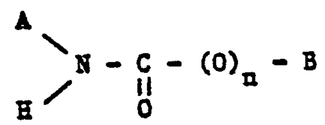

II

wherein A is aryl or heteroaryl;

n is 0 or 1

when n = 0

B is substituted amino;

and when n = 1

B is alkyl, alkenyl, alkynyl, aryl or heteroaryl.

4. A composition according to claim 1 wherein the substituted hydroxy is a substituted phenoxy, a substituted phenylphenoxy or a benzyl group.

5. A composition according to claim 1 wherein the triazole is triadimefon, triadimenol, propiconazole, bitertanol, paclobutrazol and dichlobutrazol.

6. A composition according to claim 1 the imidazole is imazalil, fenapanil and prochloraz.

7. A composition according to claim 1 wherein X is nitrogen, Z is OH, R is H, R1 is alkyl and contain up to 6 carbons, R2 is optionally halo-substituted benzyl or phenyl, m=1 and n=1.

8 . A composition according to claim 1 wherein the triazole is 1-(triazolylmethyl)-1(2-chlorobenzyl)-2,2-dimethyl-n-propanol.

9 . A composition according to claim 1 wherein the triazole is 1-(triazolylmethyl)-1-(2,4-dichlorophenyl)-n-pentanol.

10 . A composition according to claim 1 wherein the herbicidal urea is diuron, neburon, benzthiazuron, isoproturon, chloroxuron, linuron, chlortoluron, siduron, buturon, difenoxuron and chlorbumoron.

11. A composition according to claim 1 wherein the herbicidal carbamate is phenmedipham, barban, propham and chlorpropham.

12. A composition according to claim 1 wherein the relative proportions of fungicide and herbicide is within from 20:1 to 1:20.

13 . A composition according to claim 1 wherein the relative proportions of fungicide and herbicide is within from 1:1 to 1:5, respectively.

14 . A composition according to claim 3 or 9 wherein the herbicide is diuron, neburon, benzthiazuron, isoproturon, chloroxuron, linuron, chlortoluron.

15 . A composition according to claims 1 to 14 wherein there is also present another biocide, a diluent, a solvent or a dispersant.

16. Use of a composition according to claims 1 - 15 for the preservation of polymers, paint-films, wood, leather, textiles, paper products and adhesives.

17 . A method for the preservation of a medium susceptible to fungal growth which comprises incorporating into or applying to the surface of the medium a fungal-inhibiting quantity of a composition according to claim 1 to 14.

18 . A styrene-acrylic emulsion paint comprising a composition according to claim 1.

0180313

European Patent Office

# EUROPEAN SEARCH REPORT

Application number

EP 85 30 6708

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,P | EP-A-0 139 227 (BAYER)<br>* Claims * | 1-4,10 -15 | A 01 N 47/20<br>A 01 N 47/22<br>A 01 N 47/30<br>A 01 N 47/32<br>A 01 N 47/36 //<br>(A 01 N 47/20<br>A 01 N 43:653<br>A 01 N 43:50 )<br>(A 01 N 47/22<br>A 01 N 43:653<br>A 01 N 43:50 )<br>(A 01 N 47/30<br>A 01 N 43:653<br>A 01 N 43:50 )<br>(A 01 N 47/32<br>A 01 N 43:653<br>A 01 N 43:50 )<br>(A 01 N 47/36<br>-/- |
| X,P | EP-A-0 139 183 (BAYER)<br>* Claims * | 1-4,10 -15 | |
| X | FR-A-2 516 350 (ICI)<br>* Claims; page 2, lines 29-32; page 4, lines 13-18; page 4, line 35 - page 5, line 6; page 10, lines 16-28 * | 1-9,12 ,13 | |
| | | | TECHNICAL FIELDS SEARCHED (Int. Cl.4) |
| | | | A 01 N |

The present search report has been drawn up for all claims

| Place of search | Date of completion of the search | Examiner |
|---|---|---|
| THE HAGUE | 14-01-1986 | DECORTE D. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503 03 82

European Patent Office

# EUROPEAN SEARCH REPORT

Application number

EP 85 30 6708



## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| | | | A 01 N 43:653<br>A 01 N 43:50 ) |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 14-01-1986 | DECORTE D. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503 03 82